# DEMANDE DE BREVET EUROPEEN

(11) **EP 0 743 146 A1**
(43) Date de publication de la demande: **20.11.1996**
(21) Numéro de dépôt: 96480068.4
(22) Date de dépôt: 15.05.1996
(51) Int. Cl.: B26D 3/08, B26F 3/00, B29C 53/06, B44C 5/04

(54) **Procédé et installation de fabrication d'un matériau de revêtement à découpes décoratives**

(30) Priorité: 19.05.1995 FR 9506160
(71) Demandeur: NEW AMERICAN SUPPLY CORPORATION S.A.R.L., 33160 St Medard en Jalles (FR)
(72) Inventeur: Lacroix, Dominique, 33112 Saint Laurent du Medoc (FR)
(74) Mandataire: Hammond, William

(57) **Abrégé**

L'invention concerne un procédé et une installation de fabrication d'un revêtement à découpes décoratives, dans lesquels :
. on applique sur une face d'un support plan rigide dit panneau de structure (4) une feuille adhésive souple dite feuille de base (6) ;
. on réalise une succession de lignes de pré-découpe (20) rectilignes, parallèles et continues d'un bord à l'autre du panneau de structure (4), sur une partie seulement de son épaisseur ;
. on fracture la partie de l'épaisseur non découpée du panneau de structure (4) le long des lignes de pré-découpe (20), de façon à obtenir une succession de bandes parallèles (30) reliées entre elles par la feuille de base (6).

## Description

L'invention concerne un procédé et une installation de fabrication d'un matériau de revêtement à découpes décoratives.

On utilise, notamment en décoration, des matériaux de revêtement en rouleaux ou en plaques, constitués d'une feuille souple de base dont la face d'application est généralement adhésive et dont la face décorative comporte des lignes de découpe formant des motifs réguliers et conférant une certaine souplesse au matériau.

Les bandes ou les éléments décoratifs sont généralement en matériau plastique ou en verre, par exemple en miroir, ou encore en métal, par exemple en aluminium anodisé.

Le cas échéant, ces bandes ou éléments décoratifs sont eux-mêmes recouverts d'un revêtement décoratif, par exemple une couche métallisée, un placage bois, cuir, plastifié ou autre.

En raison de la séparation des bandes ou des éléments juxtaposés appliqués sur la feuille de base, le matériau de revêtement présente une certaine souplesse, ce qui permet de l'adapter sur différents types de supports, par exemple des parois arrondies, des colonnes, des objets aux formes concaves et/ou convexes.

Ces matériaux de revêtement permettent ainsi d'enrichir une décoration, par l'aspect luxueux de la couche de revêtement d'abord, par les motifs que dessinent entre eux les bandes et/ou les éléments décoratifs ensuite.

Jusqu'à présent, on a réalisé ces matériaux de revêtement à partir d'un panneau de structure, sur lequel on applique, sur une de ses faces, une feuille de base, l'autre face du panneau de structure étant une face décorative. On réalise ensuite des lignes de découpe à travers le matériau de revêtement et à travers le panneau, par exemple au moyen de couteaux, mais sans découper la feuille de base, de façon à diviser le panneau en une succession de bandes ou d'éléments décoratifs, qui ne sont plus reliés que par la feuille de base.

En variante, on n'applique pas de feuille de base sur le panneau de structure, et on découpe ce dernier sur une partie seulement de son épaisseur, de manière à conférer une certaine élasticité à l'épaisseur restante. Un procédé de ce type est décrit par exemple dans la publication DE-A-29 46 314.

Ces procédés de l'art antérieur sont cependant imparfaits. Ils demandent un matériel de grande précision, donc onéreux, notamment pour réaliser la découpe complète de l'épaisseur du panneau sans entamer la feuille de base. En raison des tolérances et des manipulations précédant l'opération de découpe, il est en pratique difficile d'obtenir des résultats réguliers et satisfaisants avec ces types de procédé.

Un but de l'invention est de proposer un procédé de fabrication d'un matériau de revêtement à découpes qui permette l'obtention d'un matériau de qualité, de mise en oeuvre facile, rapide et peu coûteuse.

A cet effet, le procédé selon l'invention pour la fabrication de matériau de revêtement à découpes décoratives, est caractérisé par le fait que :
. on applique sur un support plan rigide dit panneau de structure, sur une de ses faces, une feuille adhésive souple dite feuille de base, l'autre face du panneau de structure étant une face décorative ;
. on réalise une succession de lignes de pré-découpe rectilignes, parallèles entre elles et continues d'un bord à l'autre du panneau, de structure, sur une partie seulement de l'épaisseur de ce panneau, de façon à marquer une succession de lignes de fracture ;
. on fracture la partie de l'épaisseur non découpée du panneau de structure le long des lignes de pré-découpe, de façon à obtenir une succession de bandes, qui ne sont plus reliées entre elles que par la feuille de base.

Avantageusement, la pré-découpe est réalisée sur 1/3 à 2/3 de l'épaisseur du panneau de structure.

On peut en variante appliquer sur la face décorative du panneau de structure au moins une feuille de revêtement.

Dans une variante de réalisation, on réalise les étapes de pré-découpe et de fracture plusieurs fois successivement, selon plusieurs directions d'orientation des lignes de pré-découpe, de façon à former des éléments décoratifs de forme géométrique.

Une installation spécialement conçue pour la mise en oeuvre du procédé est caractérisée par le fait qu'elle comprend :
. un dispositif pour appliquer au moins une feuille adhésive souple sur un panneau rigide ;
. un dispositif pour réaliser des lignes de pré-découpe rectilignes, parallèles entre elles et continues d'un bord à l'autre du panneau de structure sur une partie seulement de l'épaisseur de ce panneau ;
. un dispositif pour fracturer le panneau le long des lignes de pré-découpe.

Avantageusement, le dispositif pour appliquer les feuilles adhésives est un dispositif de lamination à rouleaux.

Avantageusement, le dispositif pour réaliser les lignes de découpe est une table rectangulaire de traçage comprenant un plateau de maintien d'un panneau, une poutre transversale mobile longitudinalement sur des rails latéraux de la table et un chariot mobile coulissant transversalement sur la poutre, ce chariot portant une molette à profondeur de coupe réglable.

De préférence, le dispositif pour fracturer est une table de fracture comportant :
. un moyen de maintien constitué de deux tapis souples disposés l'un contre l'autre et maintenus sous tension dans un plan, entre lesquels on dispose un panneau pré-découpé à fracturer ;
. un organe de fracture susceptible de se déplacer d'un bord à l'autre de la table, présentant une arête de fracture perpendiculaire à sa direction de déplacement et un moyen de guidage du moyen de maintien enserrant le panneau de structure autour de cette arête, de façon à déformer ce moyen de serrage pour fracturer le panneau le long des lignes de pré-découpes au cours du déplacement de l'organe de fracture ;
. un moyen d'actionnement de l'organe de fracture.

L'un des tapis peut être monté sur un cadre pivotant sur la table, de façon à pouvoir ouvrir le moyen de maintien pour déposer un panneau à fracturer.

Le moyen de guidage peut être un cylindre d'axe parallèle à l'arête de fracture et décalé par rapport au plan des tapis.

Avantageusement, la tension de chaque tapis est réglable en fonction de l'écartement des lignes de fracture et de la rigidité du matériau du panneau de structure

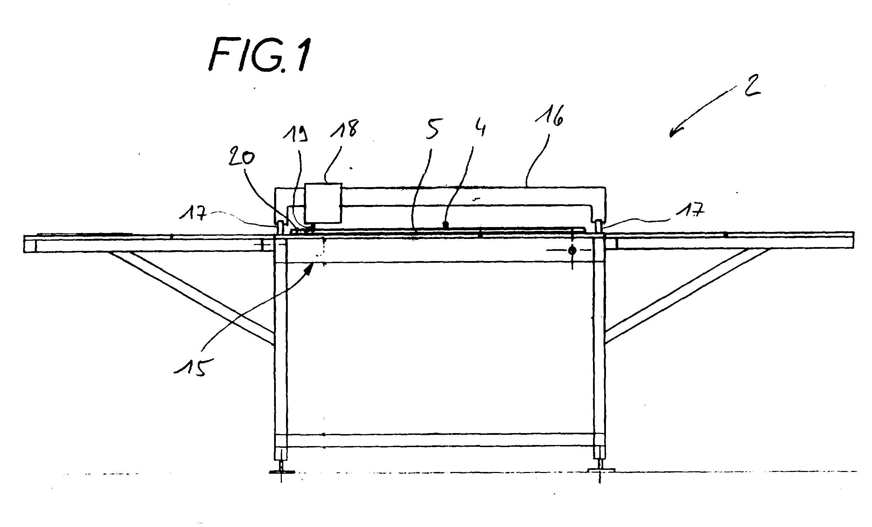

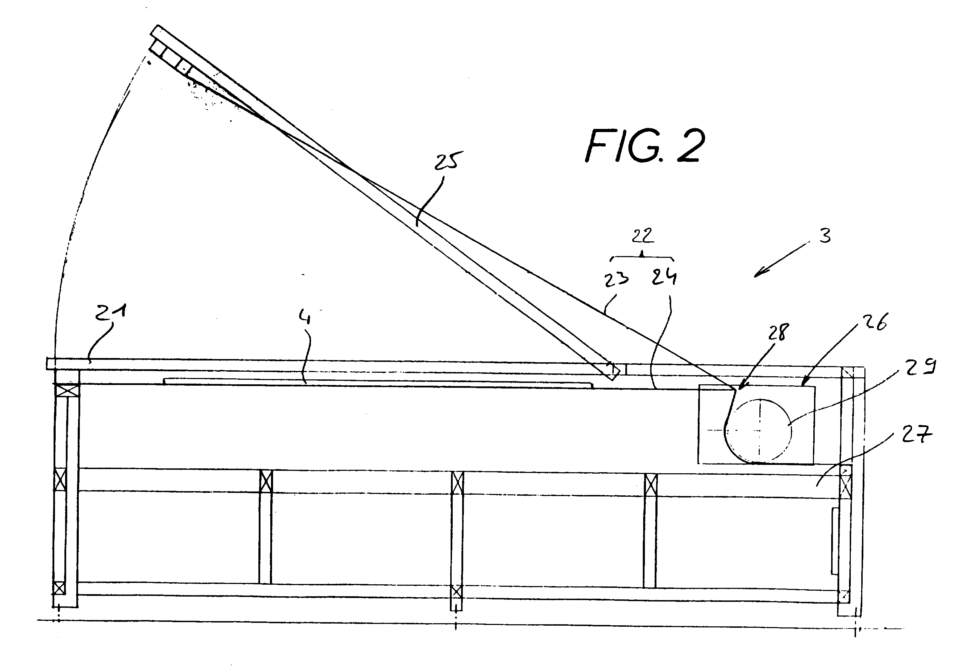

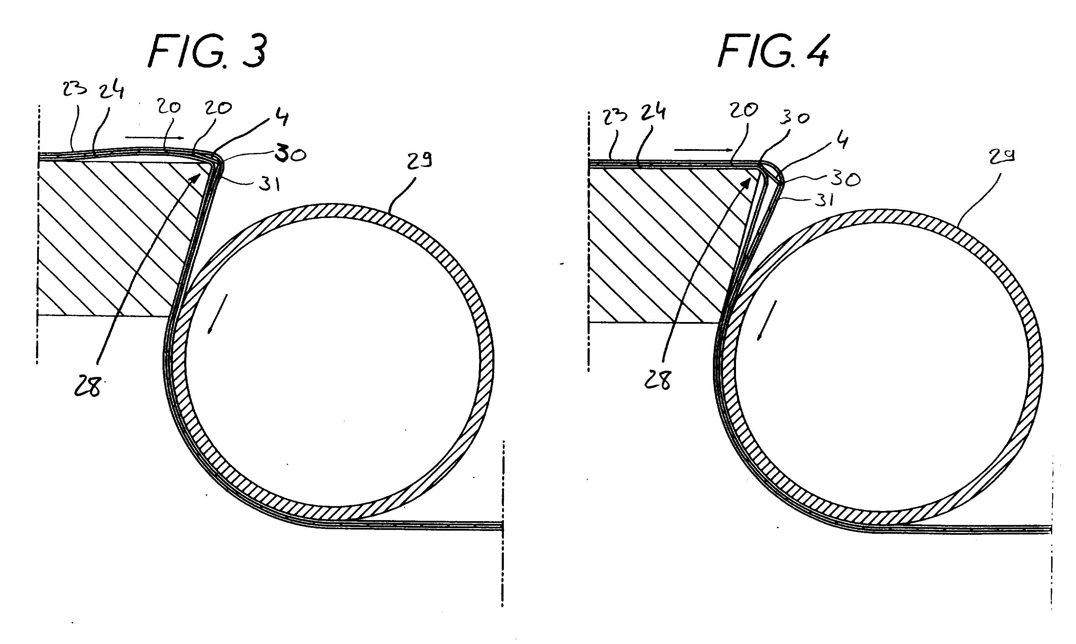

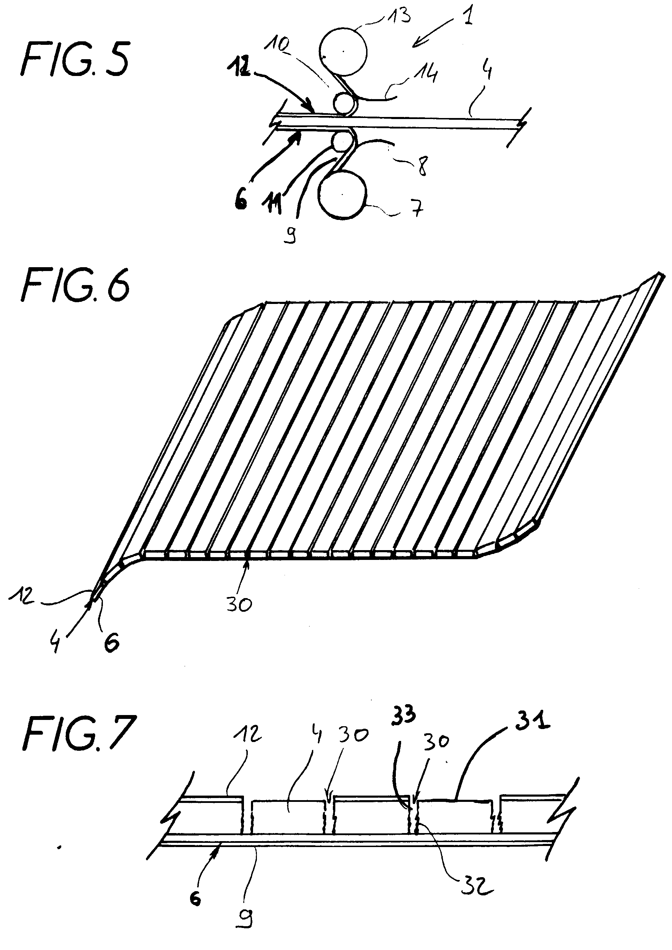

On comprendra mieux l'invention à la lecture de la description suivante d'un mode particulier de réalisation effectuée à titre d'exemple en référence aux dessins accompagnants parmi lesquels :
. la figure 1 est une vue latérale d'un dispositif de pré-découpe ;
. la figure 2 est une vue latérale d'un dispositif de fracture ;
. la figure 3 est une vue de détail en coupe d'une plaque de matériau dans le dispositif de fracture, montrant une ligne de pré découpe dans une position juste avant la fracture ;
. la figure 4 est une vue analogue à la figure 3, dans une position juste après la fracture ;
. la figure 5 est une vue schématique en coupe d'un dispositif d'application de feuilles adhésives ;
. la figure 6 est une vue en perspective d'un matériau de revêtement obtenu par le procédé selon l'invention ;
. la figure 7 est une vue partielle en coupe du matériau de revêtement.

Une installation conçue spécialement pour la mise en oeuvre du procédé selon l'invention, comprend un dispositif d'application 1 de feuilles adhésives (Fig. 5), un dispositif de pré-découpe 2 (Fig.2) et un dispositif de fracture 3 (Fig.2).

Cette installation permet la fabrication, à partir de panneaux de structure qui sont ici sous forme de plaques 4, d'un matériau de revêtement à découpes décoratives 5, dont un exemple de réalisation est représenté sur les figures 6 et 7.

Le dispositif d'application 1 de feuilles adhésives est connu en soi. A titre d'illustration, ce dispositif est représenté schématiquement sur la figure 5. Il permet l'application sur le panneau de structure 4 d'une feuille de base souple 6, ici une feuille adhésive double-face souple qui est débitée à partir d'un rouleau 7. On peut également appliquer de la même façon une feuille adhésive simple face.

Les deux faces de la feuille de base 6 sont initialement recouvertes chacune d'un film de protection respectivement 8, 9 par exemple en papier siliconé.

Le dispositif d'application 1 comprend deux cylindres 10, 11 parallèles, entre lesquels passe le panneau de structure 4 avec la feuille de base 6, de laquelle on a retiré le film de protection 8 d'une des faces adhésives, de façon que la feuille de base 6 soit appliquée sur une des faces du panneau 4.

L'autre face du panneau 4 doit être une face décorative. Le cas échéant, en raison de la qualité du matériau dont le panneau est constitué, par exemple un plastique lisse, le panneau peut présenter une face décorative en soi. En variante, on peut appliquer sur cette face une ou plusieurs feuilles adhésives de revêtement 12, choisies parmi différents types de feuilles de revêtement souple, et destinées à donner un aspect particulier à la face décorative du panneau 4. Ces feuilles de revêtement peuvent être par exemple un placage bois, du cuir, du plastique transparent ou teinté, comportant éventuellement des bossages, etc.

On a représenté sur la figure 5 l'application sur le panneau 4 de la feuille de revêtement 12 à partir d'un rouleau 13, et après avoir enlevé un film de protection 14 de la face adhésive de cette feuille de revêtement.

Le dispositif de pré-découpe, désigné dans son ensemble par la référence 2, est représenté sur la figure 1. Il est formé par une table fixe 15, équipée d'un moyen de maintien d'un panneaux 4 après application de la feuille de base 6, par exemple un moyen de maintien par dépression connu en soi (non représenté), d'une poutre transversale 16 mobile longitudinalement le long de rails latéraux 17 et d'un chariot 18 mobile le long de la poutre 16, sur lequel est montée une molette de pré-découpe 19.

La molette 19 est réglable en hauteur, de façon que l'on puisse déterminer et régler la profondeur de pré-découpe.

De façon générale, la pré-découpe doit être juste suffisante pour marquer suffisamment sur le panneau 4 une succession de lignes de pré-découpe 20 qui sont rectilignes et continues, afin que l'on puisse ensuite sans difficulté fracturer le panneau le long de ces lignes de pré-découpe, mais sans que la découpe risque de parvenir jusqu'à la feuille de base 6.

Il est impératif d'éviter que la feuille de base 6 soit découpée, même partiellement, sous peine de diminuer la résistance du matériau obtenu, et de provoquer des déchirures au moment de la pose.

La poutre, le chariot et la molette sont actionnés par des moyens appropriés connus de l'homme de l'art.

Bien entendu, la table de pré-découpe 2 est avantageusment pilotée par une commande automatique.

Cette table de pré-découpe 2 est de construction particulièrement simple. En effet, la pré-découpe a pour fonction uniquement de marquer des lignes de fracture, et non de réaliser les lignes de découpe définitives. La pré-découpe est donc généralement moins profonde, par exemple entre 1/3 et 2/3 de l'épaisseur du panneau, mais plutôt proche de 1/3. Des variations plus importantes dans la profondeur de découpe peuvent être admises.

Le dispositif de fracture, désigné dans son ensemble par la référence 3, est représenté sur les figures 2 à 4. Il est formé d'une table 21 de forme générale rectangulaire portant un moyen de maintien 22 constitué de deux tapis souples 23, 24 disposés l'un contre l'autre et maintenus sous tension dans un plan. L'un des tapis 23 est monté sur un cadre 25 pivotant sur la table 21, de façon que l'on puisse ouvrir le moyen de maintien 22 pour insérer un panneau 4 à fracturer après réalisation des lignes de pré -découpe 20. La table porte en outre un organe de fracture 26 transversal, mobile longitudinalement sur des rails latéraux 27 et présentant une arête de fracture 28 et un moyen de guidage 29 des tapis 23, 24 autour de cette arête de fracture 28.

Le moyen de guidage 29 est ici formé par un cylindre d'axe parallèle à l'arête de fracture 28, et disposé hors du plan des tapis 23, 24 de façon que ces tapis 23, 24 soient conduits autour de l'arête de fracture 28 au cours du déplacement de l'organe de fracture 26.

Plus précisément, les tapis 23, 24 sont conduits autour de l'arête de fracture 28 et autour du moyen de guidage 29 en épousant leurs formes. La position relative de l'arête de fracture 28 et du moyen de guidage 29 est déterminée en fonction du résultat recherché.

En variante, cette position relative pourrait être réglable au lieu de fixe comme représenté.

Il est en général préférable que l'arête de fracture 28 présente un angle inférieur à 90°. mais que son extrémité soit arrondie afin de ne pas déchirer les tapis 23, 24.

Lors du déplacement de l'organe de fracture 26, les tapis 23, 24 maintenant le panneau 24 à fracturer sont conduits autour de l'arête 28 et épousent ainsi un rayon de courbure minimal qui provoque la découpe 30 du panneau en bandes 31 par fracture au niveau des lignes de pré-découpe 20.

Le cadre pivotant 25 est actionné par exemple manuellement par l'opérateur pour déposer et retirer les panneaux 4. L'organe de fracture est actionné par un moyen classique connu de l'homme de l'art.

La tension des tapis 23, 24 est réglable de manière indépendante, de façon à pourvoir adapter la tension de chacun des tapis aux conditions de réalisation de la fracture, notamment en fonction de l'épaisseur du matériau, la nature du matériau, la largeur des bandes, l'épaisseur de pré-découpe, etc.

Le dispositif décrit ci-dessus en référence aux figures 2 à 4 exige que les lignes de pré-découpe 20 soient rectilignes, parallèles et continues d'un bord à l'autre du panneau 4.

Le procédé tel que l'installation décrite ci-dessus permet de le mettre en oeuvre comprend les étapes suivantes :
. on applique sur une face d'un panneau de structure 4 une feuille adhésive souple 6. Si l'autre face du panneau de structure n'est pas en soi une face décorative, on applique une ou plusieurs feuilles adhésives de revêtement telles que 12 choisies parmi les différents types disponibles, selon l'effet décoratif recherché.
. on dépose le panneau de structure 4 sur la table de pré-découpe, on réalise une succession de lignes de pré-découpe, selon des paramètres pré-déterminés en profondeur de découpe, largeur des bandes, etc.
. on insère le panneau 4 dans le moyen de maintien 22 de la table de fracture, la tension des tapis 23, 24 étant réglée de manière adaptée, et on actionne l'organe de fracture 26 en déplacement, de manière à forcer les tapis 23, 24 contenant le panneau 4 autour de l'arête de fracture 28.

On obtient par le procédé selon l'invention, de manière simple, rapide et peu onéreuse, un matériau de revêtement à découpes décoratives.

En variante, lorsque la face décorative du matériau est recouverte d'une feuille de revêtement, on peut encore ajouter une étape supplémentaire d'échenillage, c'est-à-dire où l'on enlève la feuille de revêtement 12 sur une ou plusieurs bandes selon un motif particulier, régulier ou irrégulier.

On obtient alors un aspect enrichi par la présence de deux types de décors.

Un exemple de matériau de revêtement à découpes décoratives obtenu par le procédé selon l'invention est représenté sur les figures 6 et 7. On notera sur les chants des bandes découpées 31 la partie supérieure prédécoupée 32 et la partie inférieure fracturée 33.

Comme on l'a mentionné plus haut, on peut répéter les étapes de pré-découpe et de fracture plusieurs fois avec des orientations des lignes de pré-découpe et de fracture différentes, de façon à obtenir, au lieu de bandes, des éléments décoratifs de forme géométrique, par exemple rectangulaire, en losange, etc.

## Revendications

1. Procédé pour la fabrication de matériau de revêtement à découpes rectilignes parallèles, caractérisé par le fait que :
. on applique sur une face d'un support plan- rigide dit panneau de structure (4) une feuille adhésive double-face souple dite feuille de base (6) ;
. on réalise sur le panneau de structure (4) une succession de lignes de pré-découpe (20) rectilignes et parallèles d'un bord à l'autre du panneau de structure 4, sur une partie seulement de l'épaisseur dudit panneau, de façon à marquer une succession de lignes de fracture ;
. on fracture la partie de l'épaisseur non découpée du panneau de structure (4) le long des lignes de pré-découpe (20), de façon à obtenir une succession de bandes parallèles (31), qui ne sont plus reliées entre elles que par la feuille de base (6).

2. Procédé selon la revendication 1, caractérisé par le fait que la pré-découpe est réalisée sur 1/3 à 2/3 de l'épaisseur du panneau de structure (4).

3. Procédé selon la revendication 1, caractérisé par le fait que la pré-découpe est réalisée sur environ 1/3 de l'épaisseur du panneau de structure (4).

4. Procédé selon l'une quelconque des revendications 1 à 3, caractérisé par le fait que l'on applique sur l'autre face du panneau de structure (4) au moins une feuille de revêtement (12) adhésive, préalablement à la pré-découpe et à la fracture.

5. Procédé selon la revendication 4, caractérisé par le fait qu'il comprend une étape supplémentaire dans laquelle on échenille la feuille de revêtement (12) sur certaines des bandes (31) après la pré-découpe et la fracture de façon à former des effets décoratifs.

6. Procédé selon l'une quelconque des revendications 1 à 5, caractérisé par le fait que l'on réalise, sur un même panneau (4), la pré-découpe et la fracture plusieurs fois successivement, selon plusieurs directions d'orientation des lignes de pré-découpe et de fracture, de façon à former par l'intersection des bandes (31) des éléments décoratifs de forme géométrique.

7. Installation pour la mise en oeuvre du procédé selon l'une quelconque des revendications 1 à 6, caractérisée par le fait qu'elle comprend :
. un dispositif (1) pour appliquer au moins une feuille adhésive souple (6) sur un panneau rigide (4) ;
. un dispositif (2) pour réaliser des lignes de pré-découpe (20) rectilignes,parallèles et continues d'un bord à l'autre du panneau de structure (4), sur une partie seulement de l'épaisseur dudit panneau (4) ;
. un dispositif (3) pour fracturer ledit panneau (4) le long des lignes de pré-découpe (20).

8. Installation selon la revendication 7, caractérisée par le fait que le dispositif (1) pour appliquer les feuilles adhésives (6) est un dispositif de lamination à rouleaux.

9. Installation selon l'une quelconque des revendications 7 ou 8, caractérisée par le fait que le dispositif (2) pour réaliser les lignes de découpe est une table de traçage (15) comportant un moyen de maintien des panneaux (4), une poutre transversale (16) mobile longitudinalement sur des rails latéraux (17) et un chariot (18) mobile sur la poutre (16) , ce chariot (18) portant une molette (19) à profondeur de coupe réglable.

10. Installation selon l'une quelconque des revendications 7 à 9, caractérisée par le fait que le dispositif (3) pour fracturer est une table (21) comportant :
. un moyen de maintien (22) des panneaux (4) constitué de deux tapis (23, 24) souples disposés l'un contre l'autre et maintenus sous tension dans un plan, entre lesquels on dispose un panneau (4) pré-découpé à fracturer ;
. un organe de fracture (26) susceptible de se déplacer d'un bord à l'autre de la table (21), et présentant une arête de fracture (28) perpendiculaire à la direction de déplacement et un moyen de guidage (29) des tapis (23, 24) autour de cette arête de fracture (28), de façon à déformer les tapis (23, 24) pour fracturer le panneau (4) le long des lignes de pré-découpes (20) au cours du déplacement de l'organe de fracture (26) ;
. un moyen d'actionnement de cet organe de fracture (26).

11. Installation selon la revendication 10, caractérisée par le fait que l'un (23) des tapis est monté sur un cadre (25) pivotant sur la table (21), de façon à pouvoir ouvrir le moyen de maintien (22) pour déposer un panneau (4) à fracturer.

12. Installation selon l'une des revendications 10 ou 11, caractérisée par le fait que le moyen de guidage (29) est un cylindre d'axe parallèle à l'arête de fracture (28) et décalé par rapport au plan des tapis (23, 24).

13. Installation selon l'une quelconque des revendications 10 à 12, caractérisée par le fait que la tension de chaque tapis (23, 24) est réglable de manière indépendante.
